# EUROPÄISCHE PATENTSCHRIFT

(11) **EP 3 127 789 B1**
(45) Veröffentlichungstag und Bekanntmachung des Hinweises auf die Patenterteilung: **23.10.2019**
(21) Anmeldenummer: 16182973.4
(22) Anmeldetag: 05.08.2016
(51) Int. Cl.: B62D 33/02

(54) **RUNGE FÜR EINEN NUTZFAHRZEUGAUFBAU SOWIE LADUNGSSICHERUNGSSYSTEM, NUTZFAHRZEUGAUFBAU UND NUTZFAHRZEUG MIT EINER SOLCHEN RUNGE**
STANCHION FOR A COMMERCIAL VEHICLE SUPERSTRUCTURE AND LOAD SECURING SYSTEM, COMMERCIAL VEHICLE SUPERSTRUCTURE AND COMMERCIAL VEHICLE WITH SUCH A STANCHION
RANCHE POUR UN MONTAGE DE VÉHICULE UTILITAIRE ET SYSTÈME DE SÉCURISATION DE CHARGE, MONTAGE DE VÉHICULE UTILITAIRE ET VÉHICULE UTILITAIRE COMPRENANT UNE TELLE RANCHE

(30) Priorität: 05.08.2015 DE 102015112843
(43) Veröffentlichungstag der Anmeldung: 08.02.2017
(73) Patentinhaber: Kögel Trailer GmbH, 89349 Burtenbach (DE)
(72) Erfinder: Kreis, Herr Reinhard, 89356 Haldenwang/Konzenberg (DE)
(74) Vertreter: Meissner Bolte Partnerschaft mbB

(56) Entgegenhaltungen:
- EP-A1- 1 145 938
- EP-A1- 2 184 221
- DE-U1-202006 007 873

## Beschreibung

Die Erfindung betrifft eine Runge für einen Nutzfahrzeugaufbau, insbesondere eines Sattelaufliegers, nach dem Oberbegriff des Patentanspruchs 1. Ferner betrifft die Erfindung ein Rungensystem, ein Ladungssicherungssystem, einen Nutzfahrzeugaufbau und ein Nutzfahrzeug mit jeweils einer solchen Runge. Eine Runge der eingangs genannten Art ist beispielsweise aus EP 1 816 057 A2 bekannt.

Die aus dem Stand der Technik bekannte Runge umfasst einen Rungengrundkörper, in dem ein Schiebling längsverschiebbar angeordnet ist. Der Rungengrundkörper umfasst an zwei gegenüberliegenden Seiten ein Lochmuster, so dass Halteeinrichtungen zur Aufnahme von Ladungssicherungselementen an verschiedenen Höhenpositionen des Rungengrundkörpers fixiert werden können. Die Halteeinrichtungen sind als Lattentaschen ausgebildet und in dem Lochmuster des Rungengrundkörpers durch Nieten fest fixiert. Jede Lattentasche weist zwei im Wesentlichen parallel zueinander ausgerichtete Profilschenkel auf. Die einzelnen Halteeinrichtungen bilden an den unteren Längsenden der Profilsschenkel jeweils eine Auflagefläche, so dass Ladungssicherungslatten in die Lattentaschen eingelegt werden können.

Bei der vorbekannten Runge werden die Lattentaschen bei der Herstellung auf kundenspezifischen Wunsch an verschiedenen Höhenpositionen des Rungengrundkörpers angeordnet und mit dem Rungengrundkörper fest durch Nieten verbunden. Das hat den Nachteil, dass die Position der Lattentaschen im späteren Betriebe eines Nutzfahrzeugs nur schwer veränderbar ist. Dies nimmt dem Nutzer die Möglichkeit, die Ladungssicherung individuell vorzunehmen und an das jeweilige Transportgut anzupassen. Ein weiterer Nachteil des vorbekannten Rungensystems besteht darin, dass die als Lattentaschen ausgebildeten Halteeinrichtungen ausschließlich zur Aufnahme von Latten zur Ladungssicherung geeignet sind. Alternative Ladungssicherungsvorrichtungen lassen sich daher nicht einsetzen.

Eine ähnliche Runge mit fest vernieteten Lattentaschen ist aus EP 2 184 221 A1 bekannt.

EP 1 145 938 A1 offenbart eine Runge mit einem Rungengrundkörper und Lattentaschen, wobei die Lattentaschen durch Einhänghaken lösbar mit dem Rungengrundkörper verbunden sind. Auf diese Weise können die Lattentaschen einfach auf verschiedene Höhenpositionen gesetzt werden. Die Verbindung ist jedoch wenig stabil und bildet eine Schwachstelle der Ladungssicherung.

Die Aufgabe der Erfindung besteht darin, eine Runge für einen Nutzfahrzeugaufbau anzugeben, die es ermöglicht, eine Ladungssicherungsvorrichtung flexibel zu positionieren bzw. verschiedene Ladungssicherungsvorrichtungen flexibel einzusetzen. Ferner ist es Aufgabe der Erfindung, ein Rungensystem, einen Nutzfahrzeugaufbau und ein Nutzfahrzeug mit einer solchen Runge anzugeben.

Erfindungsgemäß wird diese Aufgabe im Hinblick auf die Runge durch den Gegenstand des Patentanspruchs 1, im Hinblick auf das Rungensystem und das Ladungssicherungssystem durch die Gegenstände der Patentansprüche 9 bzw. 15 und im Hinblick auf den Nutzfahrzeugaufbau und das Nutzfahrzeug durch die Gegenstände der Patentansprüche 16 bzw. 17 gelöst.

Die Erfindung beruht auf dem Gedanken, eine Runge für einen Nutzfahrzeugaufbau, insbesondere eines Sattelaufliegers, mit einem Rungengrundkörper und wenigstens einer Halteeinrichtung für eine Ladungssicherungsvorrichtung anzugeben, wobei die Halteeinrichtung fest mit dem Rungengrundkörper verbunden ist und zwei im Wesentlichen parallel zueinander angeordnete Profilschenkel aufweist. Die Halteeinrichtung weist mehrere Aufnahmemittel für wenigstens eine Fixiereinrichtung einer Ladungssicherungsvorrichtung auf. Die Aufnahmemittel sind in unterschiedlichen Höhenpositionen der Halteeinrichtung angeordnet.

Die erfindungsgemäße Runge unterscheidet sich von dem vorbekannten Stand der Technik dadurch, dass die Halteeinrichtung selbst mehrere Aufnahmemittel aufweist, so dass eine Fixiereinrichtung einer Ladungssicherungsvorrichtung in unterschiedlichen Höhenpositionen der Halteeinrichtung, insbesondere in unterschiedlichen Höhenpositionen der Runge, angeordnet werden kann. Damit ist es möglich, die Ladungssicherungsvorrichtung flexibel einzusetzen. Diese Flexibilität bleibt dem Nutzer während des gesamten Betriebs eines Nutzfahrzeugs oder eines Nutzfahrzeugaufbaus erhalten. Mit anderen Worten kann die Position einer Ladungssicherungsvorrichtung jederzeit an das entsprechende Ladegut oder andere Transportbedingungen angepasst werden. Eine Festlegung der gewünschten Höhenpositionen bei der Herstellung der Runge ist nicht erforderlich.

Bei der Erfindung ist vorgesehen, dass die Aufnahmemittel an oder in den Profilschenkeln ausgebildet sind. Die Aufnahmemittel können beispielsweise als Stege oder ähnliche Auflageelemente ausgebildet sein, die jeweils paarweise in unterschiedlichen Höhenpositionen an den Profilsschenkeln ausgebildet sind. Es ist auch möglich, dass die Aufnahmemittel in den Profilschenkeln, beispielsweise als Bohrungen, Ausnehmungen oder Durchbrüche, ausgebildet sind.

Vorzugsweise sind die Aufnahmemittel als Durchbrüche in den Profilschenkeln ausgebildet. Dabei können jeweils zwei in gegenüberliegenden Profilschenkeln angeordnete Durchbrüche fluchtend zueinander ausgerichtet sein. Insoweit können also paarweise Durchbrüche in den Profilschenkeln vorgesehen sein, wobei entlang der Profilschenkel in unterschiedlichen Höhenpositionen mehrere Durchbruchspaare vorgesehen sind. Die Verwendung von Durchbrüchen als Aufnahmemittel für die Fixiereinrichtung einer Ladungssicherungsvorrichtung verbessert die Handhabbarkeit der Runge bzw. erleichtert die Handhabung eines Ladungssicherungssystems.

Üblicherweise sind die Profilschenkel im eingebauten Zustand der Runge in Fahrzeuglängsrichtung ausgerichtet. Die Durchbrüche in den Profilschenkeln sind somit von der Fahrzeugseite aus gut zugänglich. So kann eine Fixiereinrichtung, die in flexiblen Höhenpositionen in die Durchbrüche eingebracht, insbesondere eingeschoben, werden kann, einfach und leicht mit der Halteeinrichtung verbunden werden. Die Handhabung der Runge bzw. eines für die Runge geeigneten Ladungssicherungssystems wird also durch die seitliche Zugänglichkeit der Aufnahmemittel entscheidend erleichtert.

In einer bevorzugten Ausführungsform sind die Aufnahmemittel als Ausnehmungen, insbesondere Bohrungen, ausgebildet, wobei jeweils zwei in gegenüberliegenden Profilschenkeln angeordnete Ausnehmungen fluchtend zueinander ausgerichtet sind. Die vorzugsweise runden Ausnehmungen sind paarweise in den Profilschenkeln auf unterschiedlichen Höhenpositionen vorgesehen. Sie können einfach mittels einer Bohrung in der Runge ausgebildet sein. Durch die Ausnehmung kann eine Vielzahl an verschiedene Arten von Fixiereinrichtungen in den Aufnahmemitteln, beispielsweise mittels einer oder mehreren Schrauben, angebracht werden. Die Ausnehmungen können dabei den Profilschenkel vollständig durchbrechen oder alternativ als eine Vertiefung, oder anders gesagt eine Aussparung, im Profilschenkel ausgebildet sein. Dabei sind die Ausnehmungen derart vertieft im Profilschenkel ausgebildet, dass die Fixiereinrichtung sicher und stabil eingebracht werden kann.

Bei einer weiteren bevorzugten Ausführungsform der erfindungsgemäßen Runge ist vorgesehen, dass sich die Halteeinrichtung über wenigstens die halbe Länge, insbesondere über wenigstens zwei Drittel der Länge, insbesondere über die gesamte Länge, des Rungengrundkörpers erstreckt. Dies erhöht die Flexibilität bei der Verwendung einer Ladungssicherungsvorrichtung. So kann ein zumindest ein Großteil, insbesondere der gesamte, Rungengrundkörper in seiner Länge genutzt werden, um eine Fixiereinrichtung für eine Ladungssicherungsvorrichtung flexibel zu positionieren. Dies kommt insbesondere dann zum Tragen, wenn unterschiedliche Ladungssicherungsvorrichtungen eingesetzt werden sollen.

Beispielsweise können zur Ladungssicherung Ladungssicherungslatten vorgesehen sein, die zwischen die Profilschenkel der Halteeinrichtung positioniert und auf eine in der Halteeinrichtung angeordnete Fixiereinrichtung aufgelegt werden. Alternativ ist es möglich, eine Schiene mit einem Lochmuster, beispielsweise einem Schlüssellochmuster, in der Halteeinrichtung zu fixieren. Die Schiene kann eine oder mehrere Einsteckstangen aufnehmen. Weitere Ladungssicherungsvorrichtungen umfassen Netze oder Gitterelemente, die durch die flexible Höheneinteilung in der Halteeinrichtung einfach und schnell positioniert und/oder ausgetauscht werden können.

Insgesamt können durch die flexible Unterteilung der Halteeinrichtung bzw. die mehreren Aufnahmemittel, die in der Halteeinrichtung in unterschiedlichen Höhen angeordnet sind, nicht nur die Höhenlage einzelner Ladungssicherungsvorrichtung individuell eingestellt werden, sondern auch die Vielfalt der einsetzbaren Ladungssicherungsvorrichtungen an sich erhöht werden. Die hier beschriebene Runge ist daher nicht auf die Verwendung mit einer einzigen Ladungssicherungsvorrichtung eingeschränkt, sondern ermöglicht die Nutzung unterschiedlicher Ladungssicherungsvorrichtungen. Dies kann jeweils individuell eingestellt werden, da der Wechsel zwischen einzelnen Ladungssicherungsvorrichtungen vorzugsweise werkzeuglos erfolgt.

Bei einer weiteren bevorzugten Ausführungsform der Erfindung ist vorteilhaft vorgesehen, dass der Rungengrundkörper und die Halteeinrichtung einstückig ausgebildet sind. Insbesondere können der Rungengrundkörper und die Halteeinrichtung als einziges Bauelement geformt sein. Dies erleichtert die Herstellung des Rungengrundkörpers und der Halteeinrichtung und erhöht zudem die Stabilität der gesamten Runge. Insbesondere kann bei der Herstellung ein Montageschritt, nämlich die Verbindung zwischen Halteeinrichtung und Rungengrundkörper, vermieden werden, was zu einer Zeit- und Kostenersparnis führt. Alternativ kann die Halteeinrichtung beispielsweise durch Schweißen oder Nieten an der Runge, insbesondere einer vorderen oder hinteren Eckrunge oder Mittelrunge, angebracht sein.

Vorzugsweise sind der Rungengrundkörper und die Halteeinrichtung durch ein, insbesondere ein einziges, mehrfach abgekantetes Blech gebildet. Die Verwendung eines mehrfach abgekanteten Blechs hat in der Herstellung Zeit- und Kostenvorteile. Zudem wird durch die mehrfachen Abkantungen die Stabilität des Rungengrundkörpers insgesamt erhöht. Dies führt dazu, dass die Blechstärke reduziert und somit Material und Kosten eingespart werden können, ohne dass die Stabilität der Runge gegenüber bisherigen, herkömmlichen Rungen-Konstruktionen beeinträchtigt wird. Mit anderen Worten kann bei gleichbleibender Stabilität gegenüber vorbekannten Rungen durch die Verwendung eines einzigen, mehrfach abgekanteten Blechs, eine Materialersparnis herbeigeführt werden. Alternativ ist es möglich, bei gleichem Materialaufwand die Stabilität der Runge zu erhöhen. Ähnliche Vorteile werden erzielt, wenn der Rungengrundkörper und die Halteeinrichtung einstückig durch ein gewalztes oder gerolltes Blech gebildet sind.

Generell gilt, dass die hier beschriebene Runge sowohl als Eckrunge, als auch als Mittelrunge an einem Nutzfahrzeugaufbau vorgesehen sein kann. Insbesondere wenn die Runge als Mittelrunge genutzt werden soll, ist es vorteilhaft, wenn der Rungengrundkörper eine Führungsschiene für einen Schiebling bildet. Durch die Verwendung eines Schieblings ist es gut und einfach möglich, die Runge, die üblicherweise zwischen einem Ladeboden und einem Dach eines Nutzfahrzeugaufbaus angeordnet ist, aus dem Ladeboden bzw. unteren Rahmenteil des Nutzfahrzeugaufbaus auszuhängen und entlang des Nutzfahrzeugaufbaus zu verschieben bzw. vollständig vom Nutzfahrzeugaufbau zu entfernen. Dies ist vorteilhaft, um die gesamte Breite eines Nutzfahrzeugaufbaus zum Be- und Entladen zu nutzen. Es ist allerdings nicht ausgeschlossen, dass auch eine als Eckrunge ausgebildete Runge einen Schiebling aufweist, der in einer Führungsschiene des Rungengrundkörpers angeordnet ist.

Insofern ist vorteilhaft vorgesehen, dass der Rungengrundkörper eine im Wesentlichen C-förmige oder U-förmige Innenkontur aufweist. Mit anderen Worten kann die Führungsschiene durch eine im Wesentlichen C-förmige oder U-förmige Innenkontur des Rungengrundkörpers gebildet sein. Die Führungsschiene ist vorzugsweise nicht vollständig geschlossen, sondern weist im Querschnitt auf einer Seite zwischen den Endkanten der C-förmigen Innenkontur bzw. zwischen den Schenkeln der U-förmigen Innenkontur eine Lücke auf, so dass der in der Führungsschiene angeordnete Schiebling seitlich zugänglich ist. Vorzugsweise ist eine Arretiereinrichtung eines Schieblings über die seitliche Lücke gut zu erreichen, so dass der Schiebling in der gewünschten Verschiebeposition einfach in der Führungsschiene arretierbar ist.

Insbesondere bei Verwendung der Runge als Mittelrunge ist es außerdem vorteilhaft, dass die Runge erfindungsgemäß zwei Halteeinrichtungen aufweist, die auf gegenüberliegenden Seiten des Rungengrundkörpers vorgesehen sind. So können Ladungssicherungsvorrichtungen beidseitig an der Runge angebracht werden. Üblicherweise erstrecken sich die Ladungssicherungsvorrichtungen im montierten Zustand jeweils zwischen zwei Rungen, wobei dies zwei Mittelrungen oder eine Eckrunge und eine Mittelrunge sein können. Die beiden Halteeinrichtungen können einstückig mit dem Rungengrundkörper ausgebildet sein. Vorzugsweise sind die Halteeinrichtungen im Wesentlichen identisch aufgebaut.

Ein nebengeordneter Aspekt der Erfindung betrifft ein Rungensystem mit einer zuvor beschriebenen Runge und einer Fixiereinrichtung. Die Fixiereinrichtung kann so ausgebildet sein, dass die Fixiereinrichtung werkzeuglos an der Halteeinrichtung montierbar oder demontierbar ist. Insbesondere kann die Fixiereinrichtung so auf die Durchbrüche der Halteeinrichtung abgestimmt sein, dass die Fixiereinrichtung werkzeuglos an der Halteeinrichtung montierbar und demontierbar ist.

Die Möglichkeit der werkzeuglosen Montage bzw. Demontage der Fixiereinrichtung erleichtert die Handhabung des Rungensystems. Generell besteht insbesondere bei Speditionen ein hohes Bedürfnis nach Zeitersparnis beim Be- und Entladen eines Nutzfahrzeugaufbaus. Dazu gehören auch Maßnahmen zur Ladungssicherung, die möglichst zeitsparend durchgeführt werden sollen. Die Verwendung einer Fixiereinrichtung, die werkzeuglos montierbar und demontierbar ist, trägt signifikant zu einer Zeitersparnis bei. Kombiniert mit der Flexibilität, die die vorgeschlagene Runge für die Anordnung von Ladungssicherungsvorrichtungen bereitstellt, kann so die Zeit zum Be- und Entladen eines Nutzfahrzeugaufbaus bzw. Nutzfahrzeugs entscheidend verkürzt werden. Dies wird weiter dadurch verbessert, dass die Fixiereinrichtung auf die Durchbrüche, insbesondere die Geometrie der Durchbrüche, in den Profilschenkeln abgestimmt ist. So kann die Fixiereinrichtung seitlich in die Halteeinrichtung eingeschoben werden. Da die Halteeinrichtung seitlich gut zugänglich ist, wird die Handhabung erleichtert und somit ebenfalls ein Zeitvorteil erreicht.

Konkret kann die Fixiereinrichtung einen Rastmechanismus aufweisen, der die Fixiereinrichtung selbsttätig in der Halteeinrichtung fixiert. Durch den Rastmechanismus reicht ein einfaches Einschieben der Fixiereinrichtung in die Halteeinrichtung aus, um die Fixiereinrichtung lösbar, aber fest, in der Halteeinrichtung zu fixieren. Der Rastmechanismus ist vorzugsweise so gestaltet, dass er werkzeuglos in eine Lösestellung überführbar ist, so dass die Fixiereinrichtung leicht und schnell wieder aus der Halteeinrichtung entfernt werden kann.

Die Fixiereinrichtung kann in besonders bevorzugter Ausgestaltung der Erfindung ein Einsteckblech zum Einschieben in die Durchbrüche der Profilschenkel der Halteeinrichtung aufweisen. Ferner kann die Fixiereinrichtung eine Rastfeder umfassen, die in einem eingeschobenen Zustand der Fixiereinrichtung zwischen den Profilschenkeln der Halteeinrichtung angeordnet ist. Im eingeschobenen Zustand der Fixiereinrichtung steht die Rastfeder vorzugsweise so von dem Einsteckblech ab, dass das Einsteckblech unverlierbar in der Halteeinrichtung fixiert ist. Eine solche Konstruktion der Fixiereinrichtung ist besonders einfach und kostengünstig möglich und bildet eine stabile und sichere Möglichkeit zur Anordnung einer Ladungssicherungsvorrichtung. Das Einsteckblech kann dabei als Auflage für beispielsweise Ladungssicherungslatten dienen. Die Rastfeder ist vorzugsweise so gestaltet, dass sie einfach per Hand in eine Lösestellung überführbar ist, so dass die Fixiereinrichtung leicht von der Halteeinrichtung getrennt werden kann.

Im Rahmen der vorliegenden Anmeldung wird weiterhin ein Rungensystem mit einer zuvor beschriebenen Runge und einer Fixiereinrichtung offenbart, wobei die Fixiereinrichtung als U-förmiges Profil ausgebildet ist, welches einen Boden und zwei Schenkel umfasst, wobei die Schenkel federartig biegbar ausgebildet sind. Die Schenkel sind vorteilhafterweise parallel ausgerichtet. Der Boden kann derart abgeflacht sein, dass eine Ladungssicherungslatte von oben auf der Bodenfläche aufliegen und damit sicher in der Halteeinrichtung gelagert werden kann. Zweckmäßigerweise ist die Breite des U-förmigen Profils derart an die Breite der Halteeinrichtung angepasst, dass die Schenkel im eingesteckten Zustand der Fixiereinrichtung mit den Innenwänden der Halteeinrichtung in Kontakt stehen. Dadurch kann die Fixiereinrichtung sicher und stabil in der Halteeinrichtung angeordnet werden. Das U-förmige Profil kann zwischen dem Boden und dem jeweiligen Schenkel eine Kröpfung aufweisen. Vorteilhafterweise ist die Kröpfung angrenzend an den Boden ausgebildet. Durch die Kröpfung ist die Breite des Bodens kleiner als die Breite des Profils zwischen den beiden Schenkeln. Mittels der Kröpfung kann das U-förmige Profil einfach zusammengebogen werden, wodurch sich während des Zusammenbiegens die Breite der Fixiereinrichtung derart verringert, dass sie mühelos in die Halteeinrichtung eingesteckt werden kann. Generell kann die Fixiereinrichtung durch die Ausbildung der Kröpfung an den Schenkeln großflächig gebogen werden.

Die Schenkel können vorteilhafterweise aus einem biegsamen Blech, insbesondere Federstahl, gebildet sein. Generell ist es zweckmäßig, dass die Fixiereinrichtung aus einem Material gebildet ist, das elastisch verformbar ist, aber dennoch eine hohe Festigkeit aufweist, damit die Fixiereinrichtung das Gewicht einer Ladungssicherungslatte tragen kann ohne zu beschädigen oder sich plastisch zu verformen. Federstahl besitzt hierzu eine hohe Steifigkeit und kann gleichzeitig sehr gut elastisch verbogen werden, damit die Fixiereinrichtung auf einfache Weise in die Halteeinrichtung eingesteckt werden kann.

Damit die Fixiereinrichtung in der Halteeinrichtung befestigt werden kann, weisen in einer bevorzugten Ausführungsform die Schenkel jeweils einen Niet auf, der über eine Außenseite des jeweiligen Schenkels vorsteht und in die Aufnahmemittel der Halteeinrichtung einsteckbar ist. Insbesondere steht zweckmäßigerweise ein Nietkopf des jeweiligen Niets über die Außenseite des Schenkels hervor. Die Niete können sich durch eine zugehörige Öffnung des jeweiligen Schenkels erstrecken und darin formschlüssig fixiert sein.

Die Nietköpfe greifen im eingesteckten Zustand der Fixiereinrichtung in der Halteeinrichtung in die passenden Aufnahmemittel der Halteeinrichtung ein, um die Fixiereinrichtung in der Halteeinrichtung zu befestigen. Die Nietköpfe und die zugehörigen Aufnahmemittel der Halteeinrichtung können rund ausgebildet sein. Vorteilhafterweise sind die Niete an dem dem Boden abgewandten Ende des jeweiligen Schenkels angeordnet. Das U-förmige Profil weist im eingesteckten Zustand vorzugsweise eine nach unten orientierte Profilöffnung auf. Mit anderen Worten weist die Profilöffnung der Fixiereinrichtung im eingesteckten Zustand in Richtung zur Fahrzeugunterseite.

Weiter vorzugsweise weisen die Schenkel jeweils auf einer Innenseite einen Flügel mit einer Eingriffsöffnung, insbesondere für eine Sicherungsringzange, auf. Insbesondere steht der Flügel über die Innenseite vor. Die Innenseite ist in Richtung der Profilmitte orientiert. Die Flügel sind jeweils auf der gegenüberliegenden Seite der nach außen vorstehenden Nietköpfe angeordnet. Die Flügel können einstückig mit der Fixiereinrichtung ausgebildet oder beispielhaft durch Schweißen oder Nieten an der Fixiereinrichtung befestigt sein. Die Flügel sind vorteilhaft als rechteckiges Blech ausgebildet, wobei jegliche geometrische Form denkbar ist, damit eine Eingriffsöffnung im Flügel angebracht werden kann. Idealerweise sind die beiden Flügel senkrecht zu den Schenkeln des U-förmigen Profils orientiert.

Die Eingriffsöffnung im Flügel ist vorteilhafterweise durch eine Bohrung gebildet. In die beiden Eingriffsöffnungen der Flügel kann eine Sicherungsringzange eingreifen, um das U-förmige Profil mittels der Flügel nach innen zusammen zu biegen, damit es leicht in die Halteeinrichtung eingesteckt oder entfernt werden kann. Dazu ist das U-förmige Profil derart biegbar, dass sich die Niete aufeinander zubewegen können, damit die Fixiereinrichtung ohne Blockade in die Halteeinrichtung eingesteckt werden kann. Durch das Einstecken der Fixiereinrichtung in die Halteeinrichtung ist generell eine leichte Montage und im Bedarfsfall eine einfache Reparatur gewährleistet.

Ein nebengeordneter Aspekt der Erfindung betrifft ein Ladungssicherungssystem mit einem zuvor beschriebenen Rungensystem und einer Ladungssicherungsvorrichtung. Die Ladungssicherungsvorrichtung kann eine Befestigungsschiene aufweisen, die mit der Fixiereinrichtung in der Halteeinrichtung lösbar fixierbar ist. Die Befestigungsschiene ist vorzugsweise zur Aufnahme verschiedener Ladungssicherungselemente angepasst. Beispielsweise kann die Befestigungsschiene ein Lochmuster, insbesondere ein Schlüssellochmuster, aufweisen, so dass Einsteckstangen, Ladungssicherungsnetze oder ähnliche Ladungssicherungselemente flexibel einsetzbar sind. Das Lochmuster ermöglicht zusätzlich die Anordnung der Ladungssicherungselemente in unterschiedlichen Höhen entlang der Befestigungsschiene, insbesondere entlang der Runge.

Alternativ kann vorgesehen sein, dass die Ladungssicherungsvorrichtung ein oder mehrere Latten, insbesondere Aluminiumprofillatten, aufweist, die auf ein oder mehreren Fixiereinrichtungen in der Halteeinrichtung aufliegen. Durch die flexibel wählbare Höhenlage der Fixiereinrichtungen kann so auch die Höhe der Ladungssicherungslatten frei gewählt werden.

Die Erfindung bezieht sich ferner auf einen Nutzfahrzeugaufbau, insbesondere Anhängeraufbau oder Sattelaufliegeraufbau, oder ein Nutzfahrzeug mit einer Runge und/oder einem Rungen- oder Ladungssicherungssystem gemäß den vorstehenden Erläuterungen.

Die Erfindung wird im Folgenden anhand von Ausführungsbeispielen unter Bezugnahme auf die beigefügten, schematischen Zeichnungen näher erläutert. Darin zeigen
- Fig. 1: eine Querschnittsansicht eines Rungenkörpers einer erfindungsgemäßen Runge nach einem bevorzugten Ausführungsbeispiel;
- Fig. 2: eine Querschnittsansicht einer erfindungsgemäßen Runge mit dem Rungengrundkörper gemäß Fig. 1;
- Fig. 3: eine perspektivische Ansicht eines unteren Teils der Runge gemäß Fig. 2, wobei eine Fixiereinrichtung in der Halteeinrichtung angeordnet ist;
- Fig. 4: eine perspektivische Darstellung eines unteren Teils einer erfindungsgemäßen Runge nach einem weiteren bevorzugten Ausführungsbeispiel, wobei die Halteeinrichtung und die Fixiereinrichtung als Stecksystem ausgebildet sind;
- Fig. 5: eine perspektivische Detaildarstellung der Halteeinrichtung mit Fixiereinrichtung gemäß Fig. 4;
- Fig. 6: eine Detaildarstellung eines Durchbruchs in einem Profilschenkel der Halteeinrichtung gemäß Fig. 5;
- Fig. 7: eine perspektivische Unteransicht einer Fixiereinrichtung für die Halteeinrichtung gemäß Fig. 5;
- Fig. 8: eine perspektivische Draufsicht auf die Fixiereinrichtung gemäß Fig. 7;
- Fig. 9: eine perspektivische Ansicht der Runge gemäß Fig. 4 im montierten Zustand, wobei eine Ladungssicherungsvorrichtung in der Halteeinrichtung angeordnet ist;
- Fig. 10: eine perspektivische Seitenansicht eines Teils eines Nutzfahrzeugaufbaus mit einer erfindungsgemäßen Runge und einer herkömmlichen Runge im Vergleich;
- Fig. 11: eine perspektivische Ansicht eines Teils einer erfindungsgemäßen Runge mit einer Befestigungsschiene einer Ladungssicherungsvorrichtung, wobei die Befestigungsschiene in der Halteeinrichtung angeordnet ist;
- Fig. 12: eine perspektivische Unteransicht einer weiteren Fixiereinrichtung für eine Halteeinrichtung einer erfindungsgemäßen Runge nach einem weiteren besonders bevorzugten Ausführungsbeispiel;
- Fig. 13: eine perspektivische Ansicht der Fixiereinrichtung gemäß Fig. 12;
- Fig. 14: eine perspektivische Ansicht eines unteren Teils einer erfindungsgemäßen Runge nach einem weiteren besonders bevorzugten Ausführungsbeispiel, wobei die Fixiereinrichtung gemäß Fig. 12 in der Halteeinrichtung angeordnet ist; und
- Fig. 15: eine perspektivische Ansicht des Ausführungsbeispiels der Runge gemäß Fig. 14, wobei zwei Fixiereinrichtungen gemäß Fig. 12 in der Runge angeordnet sind.

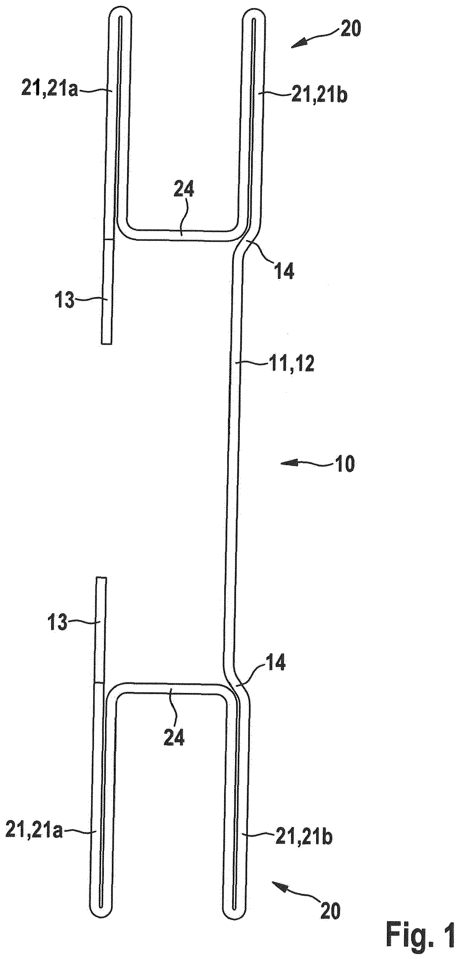

In Fig. 1 ist im Querschnitt ein Rungengrundkörper 10 gezeigt. Insbesondere zeigt Fig. 1 ein Rungengrundkörperprofil, das einerseits den Rungengrundkörper 10 und andererseits zwei Halteeinrichtungen 20 bildet. Im Wesentlichen weist der Rungengrundkörper 10 ein C-förmiges Innenprofil bzw. eine C-förmige Querschnittsform auf, die eine Führungsschiene 11 bildet. In der Führungsschiene 11 kann ein Schiebling 40 angeordnet werden, um eine teleskopierbare bzw. höhenverstellbare Runge 1 zu bilden.

Die Runge 1 weist außerdem wenigstens eine Halteeinrichtung 20 auf, die bei den hier dargestellten Ausführungsbeispielen einstückig mit dem Rungengrundkörper 10 ausgebildet ist. Es ist allerdings auch möglich, dass die Halteeinrichtung 20 und der Rungengrundkörper 10 bzw. die Führungsschiene 11 separate Bauteile bilden, die fest miteinander verbunden sind.

Die in den Zeichnungen dargestellten Ausführungsbeispiele zeigen jeweils eine Mittelrunge eines Nutzfahrzeugaufbaus bzw. Bauteile einer Mittelrunge. Eine solche Mittelrunge unterscheidet sich von einer Eckrunge eines Nutzfahrzeugaufbaus insbesondere dadurch, dass die Mittelrunge auf beiden Seiten der Führungsschiene 11 eine Halteeinrichtung 20 aufweist. Jeder Rungengrundkörper 10 umfasst also zwei Halteeinrichtungen 20, die auf gegenüberliegenden Seiten des Rungengrundkörpers 10 angeordnet sind.

Konkret ist bei den in den Zeichnungen dargestellten Ausführungsbeispielen vorgesehen, dass der Rungengrundkörper 10 und die Halteeinrichtungen 20 einstückig aus einem einzigen Blechteil gebildet sind. Das Blechteil ist mehrfach abgekantet, um einerseits die im Wesentlichen C-förmige Führungsschiene 11 und andererseits jeweils im Wesentlichen U-förmige Halteeinrichtungen 20 zu bilden. Die U-förmigen Halteeinrichtungen 20 weisen jeweils zwei Profilschenkel 21 auf, wobei die Profilschenkel 21 jeweils durch eine doppelte Blechlage gebildet sind. Konkret ist jede Halteeinrichtung 20 durch zwei Profilschenkel 21 gebildet, die durch ein Bodenblech 24 miteinander verbunden sind. Die Profilschenkel 21 und das Bodenblech 24 sind einstückig aus demselben Blechteil gebildet. Dabei weisen die Profilschenkel 21 im Wesentlichen die doppelte Wandstärke wie das Bodenblech 24 auf. Dies wird dadurch bewerkstelligt, dass das Blechteil an den freien Enden der Profilschenkel 21 um 180° umgelenkt bzw. umgefaltet und entlang der Profilschenkel 21 zurückgeführt wird. So sind die Profilschenkel 21 durch zwei übereinander gelegte Lagen des Blechteils gebildet.

Die U-förmige Halteeinrichtung 20 kann als separates oder integrales Bauteil auch an einer Eckrunge eines Nutzfahrzeugaufbaus angeordnet sein. Insbesondere kann die Halteeinrichtung 20 an einer Eckrunge montiert oder einstückig mit der Eckrunge ausgebildet sein. Die Eckrunge kann insgesamt als Walzprofil durch einen Walzprozess hergestellt sein und eine Halteeinrichtung 20 umfassen, die analog zu der in den Zeichnungen dargestellten Halteeinrichtung 20 an einer Mittelrunge ausgebildet ist.

Die Führungsschiene 11 des Rungengrundkörpers 10 ist durch das den Rungengrundkörper 10 bildende Blechteil begrenzt. Insbesondere ist die Führungsschiene 11 im Wesentlichen C-förmig ausgebildet bzw. weist eine C-förmige Innenkontur auf. Die Führungsschiene 11 bildet einen Aufnahmeraum für einen Schiebling 40. Der Aufnahmeraum ist einerseits durch ein Rückenblech 12 begrenzt, das die beiden Halteeinrichtungen 20 bzw. zwei Profilschenkel 21 zweier Halteeinrichtungen 20 miteinander verbindet. Dabei ist zwischen dem Rückenblech 12 und jeweils einem Profilschenkel 21 einer Halteeinrichtung 20 eine Kröpfung 14 ausgebildet. Das Blechteil, welches den Rungengrundkörper 10 insgesamt bildet, weist somit zwei zusätzliche Abkantungen auf, die die Stabilität des Rungengrundkörpers 10 erhöhen.

Die Führungsschiene 11 ist seitlich durch die Bodenbleche 24 der Halteeinrichtungen 20 begrenzt. Die Bodenbleche 24 der beiden Halteeinrichtungen 20 bilden so mit dem Rückenblech 12 eine dreiseitige Begrenzung der Führungsschiene 11. Eine weitere Begrenzung bilden zwei Blechstreifen 13, die im Wesentlichen parallel zum Rückenblech 12 ausgebildet sind und jeweils eine Verlängerung eines Profilschenkels 21 einer Halteeinrichtung 20 bilden. Die Blechstreifen 13 sind voneinander beabstandet angeordnet bzw. bilden zwischen sich eine Lücke oder einen Spalt aus.

Das in Fig. 1 dargestellte Rungengrundkörperprofil ist vorzugsweise über die gesamte Länge des Rungengrundkörpers 10 unverändert. So kann das Rungengrundkörperprofil einfach durch mehrfaches Abkanten eines rechteckigen Blechstreifens hergestellt werden. Durch die mehrfachen Abkantungen in den Halteeinrichtungen 20 und am Rückenblech 12, insbesondere die dortige Kröpfung 14, wird die Stabilität des Rungengrundkörpers 10 erhöht. So kann ein Blechteil mit relativ geringerer Wandstärke eingesetzt werden, um dieselbe Stabilität wie bei herkömmlichen Rungengrundkörpern 10 zu erreichen. Alternativ können diese Vorteile erreicht werden, indem das Rungengrundkörperprofil durch einen Walzprozess hergestellt wird. Das Rungengrundkörperprofil kann insoweit durch einen gerollten oder gewalzten Blechstreifen gebildet sein.

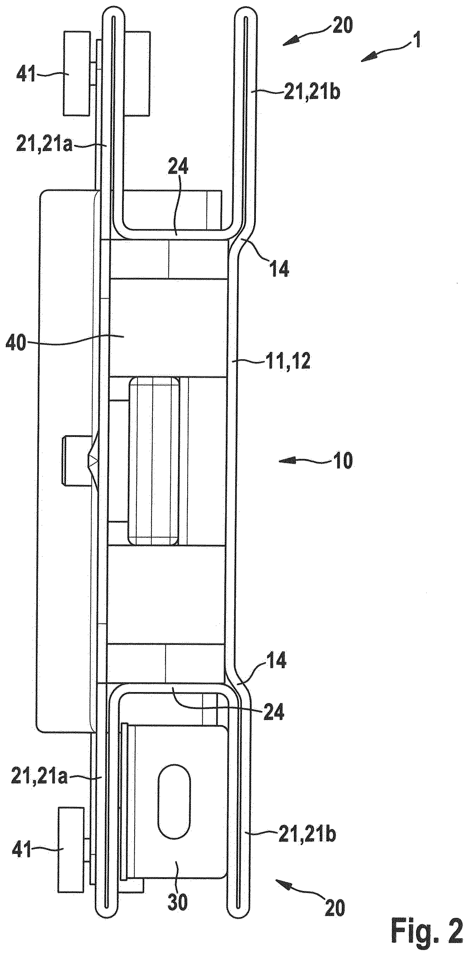

Fig. 2 zeigt eine Draufsicht auf eine Runge 1, die einen Rungengrundkörper 10 gemäß Fig. 1 aufweist. In Fig. 2 ist gut erkennbar, dass im Rungengrundkörper 10 der Schiebling 40 angeordnet ist. Der Schiebling 40 kann Rollen 41 aufweisen, so dass die Runge insgesamt entlang eines Nutzfahrzeugaufbaus verschiebbar ist.

Der Schiebling 40 ist in der Führungsschiene 11 verschiebbar gelagert und weist ein Arretiermittel auf, um den Schiebling 40 in unterschiedlichen Höhenpositionen entlang der Führungsschiene 11 arretieren zu können.

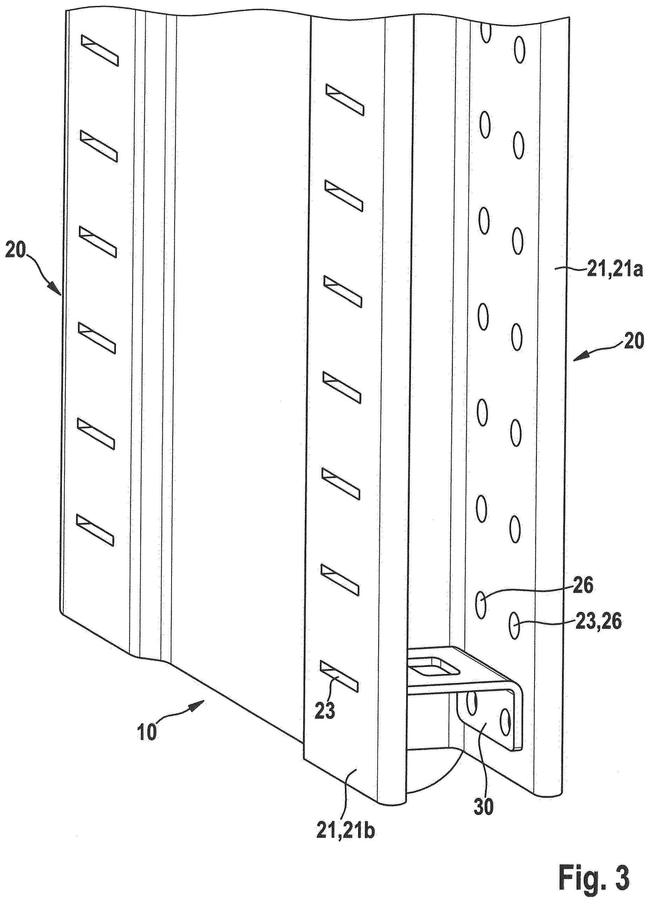

In Fig. 2 ist außerdem eine Fixiereinrichtung 30 erkennbar, die in einer der Halteeinrichtungen 20 angeordnet ist. Die Fixiereinrichtung 30 ist bei dem vorliegenden Ausführungsbeispiel als Winkelblech ausgebildet, welches beispielsweise durch Verschrauben in der Halteeinrichtung 20 fixiert sein kann. Die Möglichkeiten der Anordnung einer Fixiereinrichtung 30 in der Halteeinrichtung 20 sind in Fig. 3 deutlich zu erkennen.

Fig. 3 zeigt in perspektivischer Ansicht einen Rungengrundkörper mit zwei Halteeinrichtungen 20. Jede Halteeinrichtung 20 weist zwei Profilschenkel 21 auf. Die Profilschenkel 21 umfassen jeweils Durchbrüche 23, die die Aufnahme einer Fixiereinrichtung 30 ermöglichen. Wie in Fig. 3 gut erkennbar ist, sind die Durchbrüche 23 in den Profilschenkeln 21 in regelmäßigen Abständen zueinander angeordnet. Somit kann auf einfache Art und Weise eine beliebige Höhe für die Fixiereinrichtung 30 gewählt und die Fixiereinrichtung 30 in der beliebigen Höhe mit der Halteeinrichtung 20 fest verbunden werden. Beispielsweise kann die Fixiereinrichtung 30 bzw. das in Fig. 3 dargestellte Winkelblech ein Einhakelement aufweisen, das in die schlitzförmigen Durchbrüche 23 des einen Profilschenkels 21 eingreift. Mit dem gegenüberliegenden Profilschenkel 21 kann die Fixiereinrichtung 30 beispielsweise verschraubt sein. Dazu weist der gegenüberliegende Profilschenkel 21 zwei Bohrungen 26 auf, deren Abstand so bemessen ist, dass Bohrungen in der Fixiereinrichtung 30 mit den Bohrungen 26 in dem Profilschenkel 21 koaxial zueinander ausgerichtet werden können. So kann die Fixiereinrichtung 30 einfach und sicher mit der Halteeinrichtung 20 verschraubt werden.

Die Fixiereinrichtung 30 kann im Wesentlichen eine Auflage für eine Ladungssicherungsvorrichtung 50, beispielsweise eine Ladungssicherungslatte 53 bilden. Dabei kann die Fixiereinrichtung 30 in unterschiedlichen Höhenpositionen entlang des Rungengrundkörpers 10 angeordnet werden. So kann der Nutzer der Runge bzw. eines Nutzfahrzeugs einfach und spontan entscheiden, auf welcher Höhe die Ladungssicherungsvorrichtung 50 platziert werden soll.

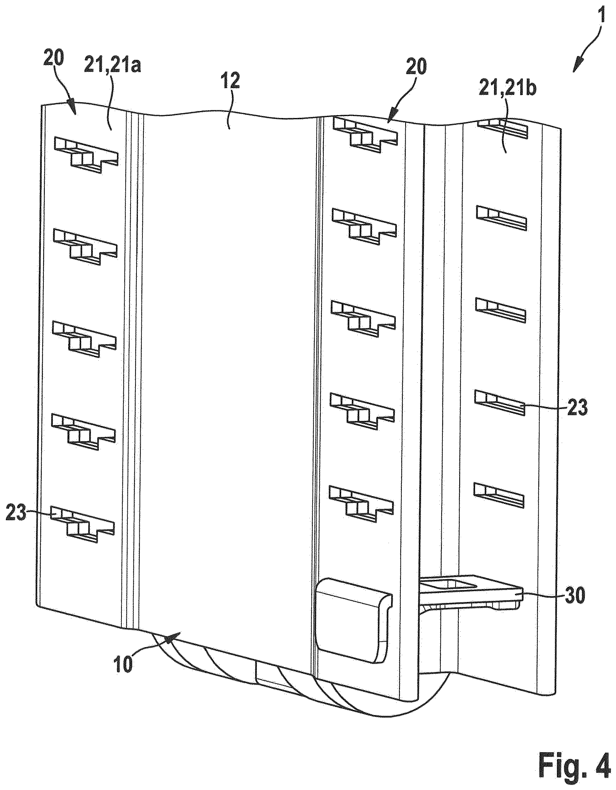

In den Fig. 4-9 ist eine alternative Variante eines Ladungssicherungssystems dargestellt, das eine Runge 1 mit einem Rungengrundkörper 10 und eine Fixiereinrichtung 30 umfasst. Der Rungengrundkörper 10 ist mit zwei Halteeinrichtungen 20 einstückig aus einem mehrfach abgekanteten Blechteil gebildet. Im Wesentlichen weist der Rungengrundkörper 10 ein Rungengrundkörperprofil auf, das dem Rungengrundkörperprofil gemäß Fig. 1 entspricht. Im Unterschied zu den vorherigen Ausführungsbeispielen ist bei den Ausführungsbeispielen gemäß Fig. 4-9 jedoch vorgesehen, dass die Durchbrüche 23 in den Profilschenkeln 21 der Halteeinrichtung 20 jeweils als schlitzförmige Öffnungen ausgebildet sind. Dabei weist eine schlitzförmige Öffnung jeweils eines Profilschenkels 21 einer Halteeinrichtung 20 eine zusätzliche Ausnehmung auf.

Konkret ist vorgesehen, dass jede Halteeinrichtung 20 zwei Profilschenkel 21 aufweist. Ein äußerer Profilschenkel 21a ist im montierten Zustand der Runge 1 an einem Nutzfahrzeugaufbau vorzugsweise zur Außenseite des Nutzfahrzeugaufbaus gewandt. Im Wesentlichen parallel zum äußeren Profilschenkel 21a verläuft ein innerer Profilschenkel 21b der Halteeinrichtung 20, der dem Laderaum des Nutzfahrzeugaufbaus im montierten Zustand zugewandt ist.

Der innere Profilschenkel 21a weist mehrere, im Wesentlichen rechteckige, schlitzförmige Durchbrüche 23 auf. Die Durchbrüche 23 im inneren Profilschenkel 21b sind in regelmäßigen Abständen zueinander angeordnet. Es ist allerdings auch möglich, unregelmäßige Abstände vorzusehen.

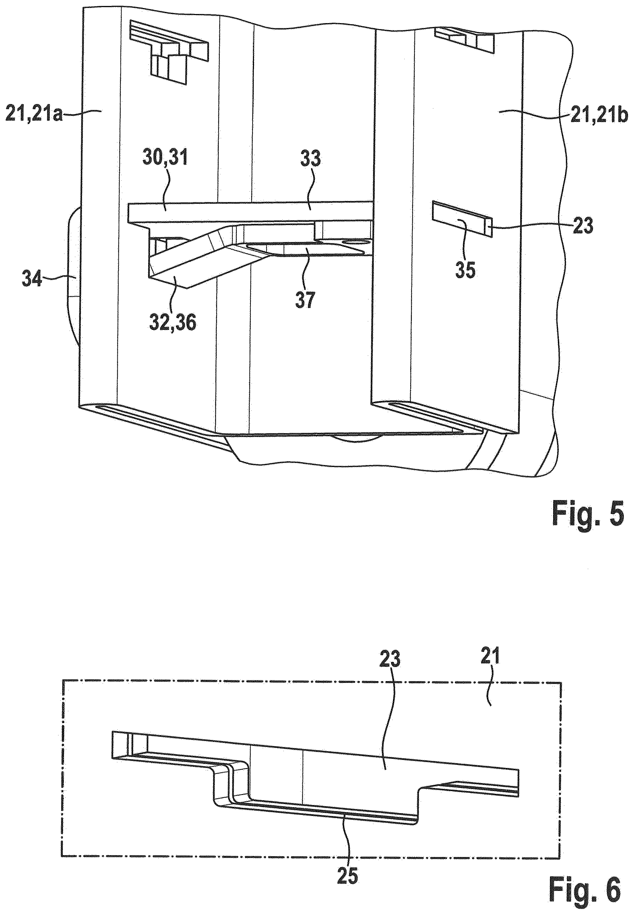

Der äußere Profilschenkel 21a weist ebenfalls im Wesentlichen rechteckige, schlitzförmige Durchbrüche 23 auf, die jeweils in einer Ebene mit den Durchbrüchen 23 des inneren Profilschenkels 21b ausgerichtet sind. Die Durchbrüche 23 im äußeren Profilschenkel 21a umfassen jedoch ferner jeweils eine untere Ausnehmung, so dass die Durchbrüche 23 im äußeren Profilschenkel 21a im Wesentlichen eine T-förmige Kontur aufweisen (Fig. 6).

Die Profilschenkel 21 können gleiche oder unterschiedliche Längen aufweisen. Beispielsweise kann der innere Profilschenkel 21b kürzer als der äußere Profilschenkel 21a, oder umgekehrt, sein. Dabei wird die Länge der Profilschenkel 21 in Längsrichtung des Fahrzeugs, insbesondere in einer horizontalen Ebene, gemessen.

Bei dem Ausführungsbeispiel gemäß Fig. 4-9 ist vorgesehen, dass das Rückenblech 12 im montierten Zustand der Runge 1 an einem Nutzfahrzeugaufbau auf einer Außenseite des Nutzfahrzeugsaufbaus angeordnet ist.

Wie in Fig. 4 und 5 gut erkennbar ist, ist in eine Halteeinrichtung 20 der Runge 1 eine Fixiereinrichtung 30 eingeführt. Die Fixiereinrichtung 30 ist dabei derart gestaltet, dass sie werkzeuglos montierbar und demontierbar, also werkzeuglos in der Halteeinrichtung 20 fixierbar und aus der Halteeinrichtung 20 lösbar ist.

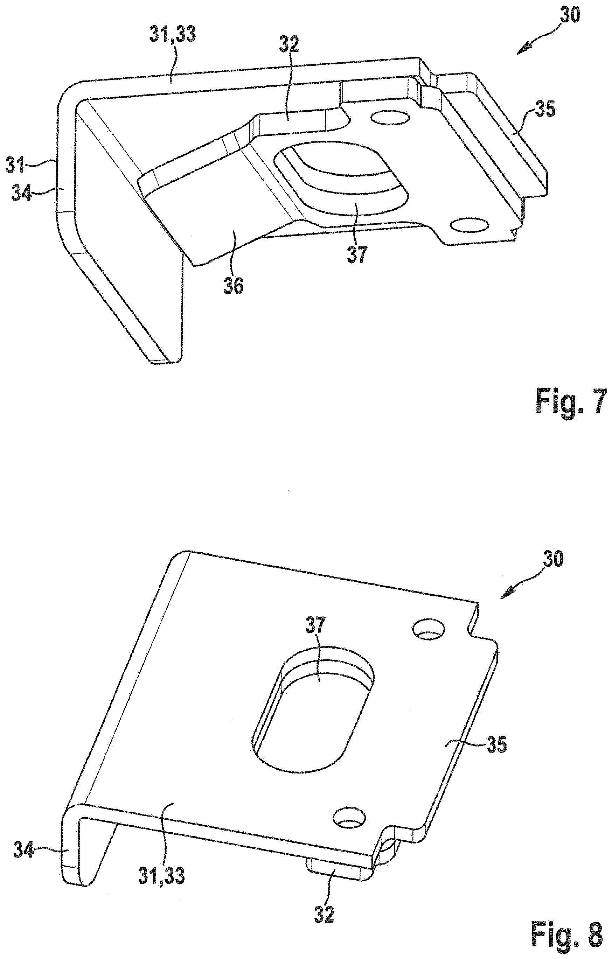

Die Fixiereinrichtung ist im Detail in den Fig. 7 und 8 dargestellt. Konkret umfasst die Fixiereinrichtung 30 ein Einsteckblech 31, das im Wesentlichen als Winkelblech ausgebildet ist. Insbesondere umfasst das Einsteckblech 31 einen Auflageschenkel 33 und einen Griffschenkel 34. Der Auflageschenkel 33 und der Griffschenkel 34 sind im Wesentlichen rechtwinklig zueinander angeordnet. Der Auflageschenkel 33 ist im montierten Zustand zwischen den Profilschenkeln 21 der Halteeinrichtung 20 positioniert. Zur Gewichtsersparnis umfasst der Auflageschenkel 33 eine Öffnung bzw. einen Freischnitt 37.

An einem freien Ende des Auflageschenkels 33 ist eine Feder 35 vorgesehen, deren Breite im Wesentlichen der Breite eines Durchbruchs 23 im inneren Profilschenkel 21b entspricht. Der Auflageschenkel 33 selbst weist eine Breite auf, die größer als die Breite des Durchbruchs 23 des inneren Profilschenkels 21b ist. So kann der Auflageschenkel 33 mit dem Durchbruch 23 des inneren Profilschenkels 21b steckverbunden werden.

Der Durchbruch 23 im äußeren Profilschenkel 21a weist hingegen eine Breite auf, die im Wesentlichen der Breite des Auflageschenkels 33 entspricht. Dies gewährleistet, dass der Auflageschenkel 33 bzw. allgemein das Einsteckblech 31 durch den äußeren Profilschenkel 21a hindurchgeführt werden kann. Der Griffschenkel 34 ist im montierten Zustand der Fixiereinrichtung 30 bzw. des Einsteckblechs 31 außerhalb des äußeren Profilschenkels 21a angeordnet. Insbesondere kann der Griffschenkel 34 mit einem Abstand zur Außenfläche des äußeren Profilschenkels 21a angeordnet sein, so dass ein Benutzer den Griffschenkel 34 leicht greifen kann.

Fig. 6 zeigt einen Durchbruch 23 in einem, vorzugsweise äußeren, Profilschenkel 21 einer Halteeinrichtung 20. Der Durchbruch 23 weist ein im Wesentlichen rechteckiges Grundprofil auf, an das sich eine Ausnehmung 25 anschließt. Die Ausnehmung 25 bildet mit dem Durchbruch 23 eine im Wesentlichen T-Förmige Durchbruchs- bzw. Öffnungskontur.

Mit dem Einsteckblech 31 der Fixiereinrichtung 30 fest verbunden ist eine Rastfeder 32. Konkret ist die Rastfeder 32 mit dem Auflageschenkel 33 fest verbunden. Die Rastfeder 32 ist auf einer dem Griffschenkel 34 zugewandten Seite des Auflageschenkels 33 angeordnet. Analog zum Auflageschenkel 33 umfasst auch die Rastfeder 32 einen Freischnitt zur Gewichtsersparnis.

Die Rastfeder 32 weist einen Auslenkabschnitt 36 auf, der in einem Ruhezustand von dem Auflageschenkel 33 absteht. Der Auslenkabschnitt 36 ist flexibel und kann gegen eine Federkraft in Richtung des Auflageschenkels 33 bewegt werden. Die Rastfeder 32 bewirkt eine Fixierung bzw. unverlierbare Anordnung des Einsteckblechs 31 bzw. der Fixiereinrichtung 30 in der Halteeinrichtung 20.

Das Einsteckblech 31 und die Rastfeder 32 können auch einstückig, insbesondere integral, ausgebildet sein. So kann beispielsweise im Auflageschenkel 33 des Einsteckblechs 31 ein Auslenkabschnitt 36 vorgesehen sein. Ein Teilsegment des Auflageschenkels 33 kann insbesondere durch einen U-förmigen Schnitt im Auflageschenkel 33 freigelegt und zumindest abschnittsweise aus der Ebene des Auflageschenkels 33 herausgebogen sein, um den in einem Ruhezustand aus dem Auflageschenkel 33 vorstehenden Auslenkabschnitt 36 zu bilden. Vorzugsweise ist der Auslenkabschnitt 36 bei einer einstückigen Ausbildung mit dem Auflageschenkel 33 zwischen dem Griffschenkel 34 und dem Freischnitt 37 angeordnet.

In Fig. 5 ist die Fixiereinrichtung 30 in einer montierten Stellung in der Halteeinrichtung 20 gezeigt. Zum Anordnen der Fixiereinrichtung 30 in der Halteeinrichtung 20 wird die Fixiereinrichtung 30, insbesondere das Einsteckblech 31, zunächst durch den Durchbruch 23 im äußeren Profilschenkel 21a geführt. Die Fixiereinrichtung 30 wird dann weiter geschoben, bis die Feder 35 des Einsteckblechs 31 in den Durchbruch 23 des inneren Profilschenkels 21b gelangt. Beim Vorschieben des Einsteckblechs 31 wird der Auslenkabschnitt 36 der Rastfeder 32 in Richtung des Auflageschenkels 32 ausgelenkt und kann so durch die Ausnehmung 25 im Durchbruch 23 des äußeren Profilschenkels 21 hindurchtreten. Sobald die Rastfeder 32 durch den äußeren Profilschenkel 21a hindurchgetreten ist, bewirkt die Federkraft der Rastfeder 32, dass sich der Auslenkabschnitt 36 in eine vom Auflageschenkel 33 abstehende Position bewegt und so eine rückwärtige Bewegung der Fixiereinrichtung 30 durch den Durchbruch 23 im äußeren Profilschenkel 21a blockiert. Mit anderen Worten kann die Fixiereinrichtung 30 nun nicht mehr aus der Halteeinrichtung 20 gezogen werden. Dies ist erst möglich, wenn der Auslenkabschnitt 36, beispielsweise manuell, in Richtung des Auflageschenkels 33 gedrückt wird, so dass die Rastfeder 32 wieder durch den Durchbruch 23 im äußeren Profilschenkel 21a hindurchtreten kann. Auf diese Weise ist eine besonders einfache Fixierung der Fixiereinrichtung 30 möglich, wobei auf ein Werkzeug zur Befestigung der Fixiereinrichtung 30 an der Halteeinrichtung 20 verzichtet werden kann.

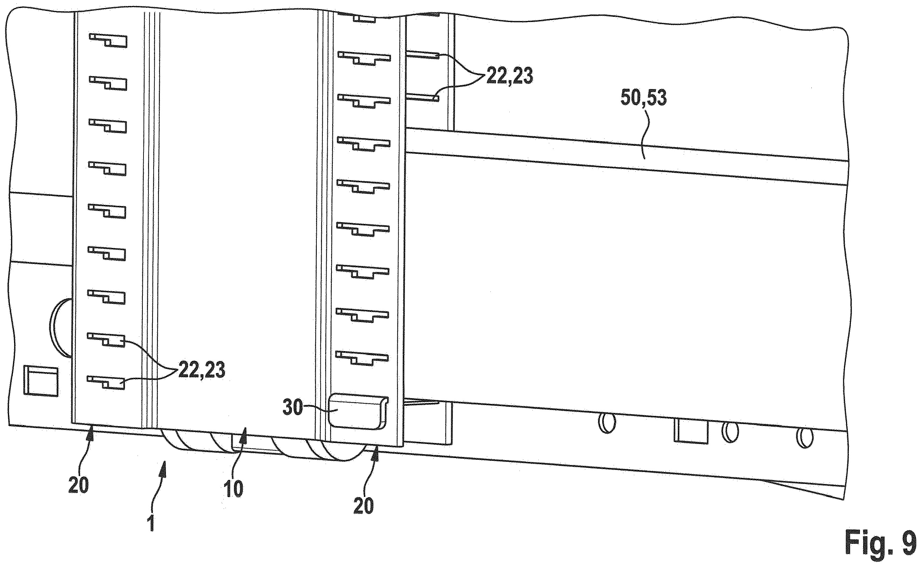

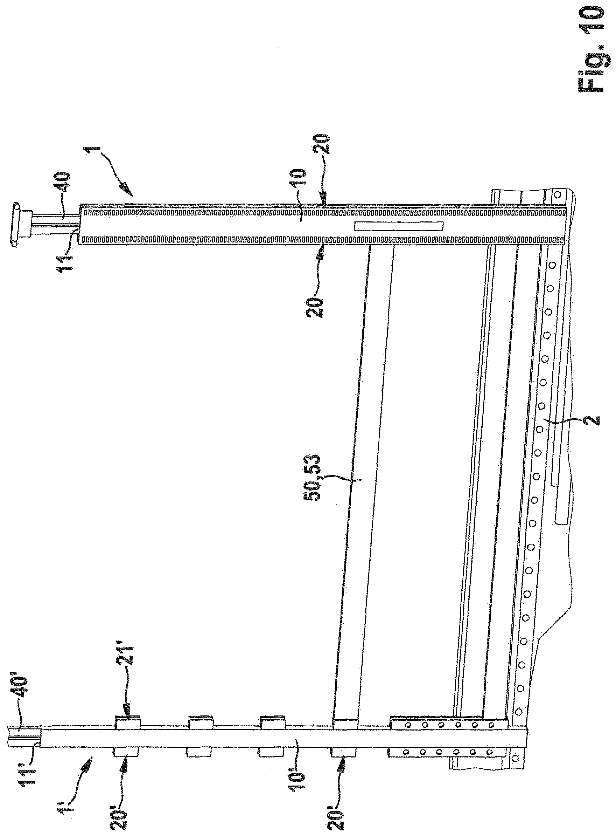

Da die Halteeinrichtung 20 über ihre gesamte Höhe hinweg mehrere Aufnahmemittel 22 in Form der Durchbrüche 23 aufweist, kann die Fixiereinrichtung 30 beliebig und für den jeweiligen Bedarfsfall individuell in ihrer Höhe eingestellt werden. Die Fixiereinrichtung 30 kann dabei als Auflage für eine Ladungssicherungsvorrichtung, beispielsweise eine Ladungssicherungslatte 53 genutzt werden. Eine solche Variante ist in Fig. 10 dargestellt. Fig. 10 zeigt konkret eine Detailansicht einer Runge 1, die an einem Fahrzeugrahmen 2 befestigt ist. Die Runge 1 weist einen Rungengrundkörper 10 mit zwei Halteeinrichtungen 20 auf, wobei der Rungengrundkörper 10 und die Halteeinrichtung 20 im Wesentlichen ein Rungengrundkörperprofil aufweisen, wie es in Fig. 4 dargestellt ist. Die Halteeinrichtung weist mehrere Aufnahmemittel 22 in den Profilschenkeln 21 auf, die als Durchbrüche 23 ausgebildet sind. In einem untersten Aufnahmemittel 22 ist eine Fixiereinrichtung 30 angeordnet. Die Fixiereinrichtung 30 ist analog der Ausführungsform gemäß Fig. 8 und 9 ausgebildet. Die Fixiereinrichtung 30 bildet mit dem Auflageschenkel 33 des Einsteckblechs 31 eine Auflage für eine Ladungssicherungslatte 53. Die Ladungssicherungslatte 53 kann also einfach in die Halteeinrichtung 20 eingeführt werden und liegt dann auf der Fixiereinrichtung 30 auf. In der in Fig. 10 gezeigten Position kann die Ladungssicherungslatte 53 insbesondere als Palettenanschlag genutzt werden.

Durch die mehreren Aufnahmemittel 22 in der Halteeinrichtung 20 ist es möglich, mehrere Fixiereinrichtungen 30 entlang des gesamten Rungengrundkörpers 10 anzubringen. So können mehrere Ladungssicherungsvorrichtungen 50, insbesondere mehrere Ladungssicherungslatten 53 entlang des Rungengrundkörpers 10 angeordnet werden. Es ist auch möglich, die Höhe der einzelnen Ladungssicherungslatten 53 individuell einzustellen. Dazu ist lediglich die Fixiereinrichtung 30 aus der Halteeinrichtung 20 zu lösen und in einer anderen Höhenposition mit den Aufnahmemitteln 22 der Halteeinrichtung 20 zu verbinden. Dies kann werkzeuglos erfolgen, wodurch die Hantierbarkeit erleichtert ist.

In Fig. 10 ist in einer Teilseitenansicht eines Nutzfahrzeugaufbaus ein direkter Vergleich zwischen zwei Mittelrungen gezeigt, wobei die in der linken Bildhälfte dargestellte Mittelrunge in herkömmlicher Bauweise und die in der rechten Bildhälfte dargestellte Mittelrunge erfindungsgemäß ausgebildet ist. Für die Veranschaulichung des Vergleichs sind ähnliche Bauteile der beiden Rungen mit denselben Bezugszeichen versehen, wobei die Bauteile der herkömmlichen Runge 1' mit einem Hochkomma gekennzeichnet sind. Beide Rungen sind mit dem Fahrzeugrahmen 2 des Nutzrfahrzeugaufbaus verbunden.

Die herkömmliche Runge 1' umfasst einen Rungengrundkörper 10', der im Wesentlichen ein C-Profil bildet. Das C-Profil dient als Führungsschiene 11' für einen Schiebling 40'. Seitlich an dem Rungengrundkörper 10' sind mehrere Halteeinrichtungen 20' angeordnet, die jeweils als Lattentaschen ausgebildet sind. Die Halteeinrichtungen 20' umfassen jeweils zwei Profilschenkel 21', die im Wesentlichen parallel zueinander angeordnet sind. An der Unterseite der Lattentasche ist eine Auflagefläche gebildet, so dass die Halteeinrichtung 20' im Wesentlichen eine U-förmige Tasche bildet. Die Halteeinrichtungen 20' sind fest am Rungengrundkörper 10 angeordnet, insbesondere vernietet, wobei eine flexible Höhenverschiebung verhindert ist. Der Rungengrundkörper 10 weist ein entsprechendes Lochmuster auf, so dass die Halteeinrichtungen 20' in unterschiedlichen Höhenpositionen angeordnet werden können. Diese ist allerdings nur bei der Herstellung der herkömmlichen Runge 1' möglich. Ein späteres Umsetzen der Halteeinrichtunggen 20' ist nicht vorgesehen.

Bei der erfindungsgemäßen Runge 1, die in der rechten Bildhälfte von Fig. 10 dargestellt ist, ist die Halteeinrichtung 20 im Wesentlichen über die gesamte Länge des Rungengrundkörpers 10 ausgebildet und fest, insbesondere einstückig, mit dem Rungengrundkörper 10 verbunden. Die Profilschenkel 21 weisen Durchbrüche 23 auf, die von der Seite aus zugänglich sind. Somit kann die Fixiereinrichtung 30 leicht von außen in die Halteeinrichtung 20 eingebracht werden. Dies ermöglicht es, eine besonders einfache und schnelle Höhenverstellung für die Ladungssicherungslatten 53 vorzunehmen. Das Querschnittsprofil des Rungengrundkörpers 10 gemäß Fig. 10 entspricht im Wesentlichen dem Querschnittsprofil des Rungengrundkörpers gemäß Fig. 4.

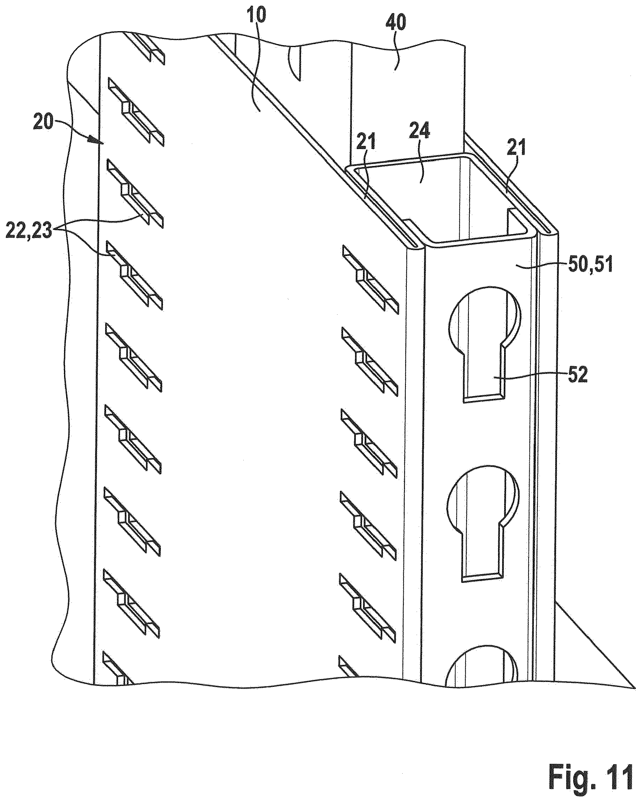

Eine weitere Besonderheit der erfindungsgemäßen Runge 1 besteht darin, dass die Halteeinrichtung 20 nicht nur zur Aufnahme von Ladungssicherungslatten genutzt werden kann, sondern auch alternative Ladungssicherungsvorrichtungen 50 aufzunehmen vermag. Beispielhaft ist in Fig. 11 eine Befestigungsschiene 51 dargestellt, die im Wesentlichen ein U-förmiges Querschnittsprofil aufweist, das sich zwischen die Profilschenkel 21 der Halteeinrichtung 20 anordnen lässt. Die Fixierung der Befestigungsschiene 51 kann über die Fixiereinrichtung 30 erfolgen. Dazu weist die Befestigungsschiene 51 entsprechende Durchbrüche auf, durch die die Fixiereinrichtung 30 geführt werden kann. Die Fixiereinrichtung 30 kann so die Befestigungsschiene 51 in der Halteeinrichtung 20 arretieren.

Die Befestigungsschiene 51 weist vorzugsweise mehrere Öffnungen, insbesondere Schlüssellochöffnungen 52 auf. Die Schlüssellochöffnungen 52 können regelmäßig entlang der Befestigungsschiene 51 angeordnet sein. Die Befestigungsschiene 51 selbst kann sich über die gesamte Länge der Halteeinrichtung 20 oder nur über einen Teil der Länge der Halteeinrichtung 20 erstrecken. Jedenfalls ermöglicht es die Befestigungsschiene 51, andere Ladungssicherungsvorrichtungen 50 an der Runge 1 anzubringen. Beispielsweise können mit entsprechenden Gegenstücken ausgebildete Ladungssicherungsbalken oder Ladungssicherungsstangen bzw. Einsteckstangen mit der Befestigungsschiene 51 verbunden werden. Es ist auch denkbar, die Schlüssellochöffnungen 52 der Befestigungsschiene 51 zu nutzen, um ein Ladungssicherungsnetz zwischen zwei in Längsrichtung eines Fahrzeugaufbaus angeordnete Rungen 1 zu spannen. Auch gitterartige Ladungssicherungsvorrichtungen 50 könnten auf diese Weise mit der Befestigungsschiene 51 bzw. der Runge 1 verbunden werden. Insgesamt ermöglicht die mit den mehreren Aufnahmemitteln 22 ausgebildete Halteeinrichtung 20 am Rungengrundkörper 10 eine hohe Flexibilität bei der Auswahl von Ladungssicherungsvorrichtungen 50.

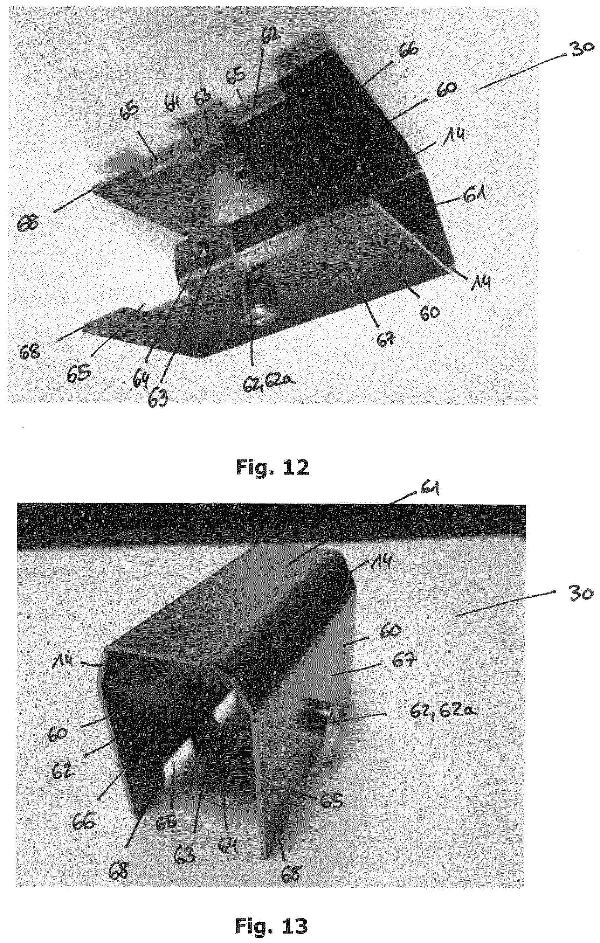

Fig. 12 und Fig. 13 zeigen im Detail eine perspektivische Ansicht einer weiteren Fixiereinrichtung 30 für eine Halteeinrichtung 20 einer erfindungsgemäßen Runge nach einem weiteren besonders bevorzugten Ausführungsbeispiel. Fig. 12 stellt hierbei eine Unteransicht und Fig. 13 eine seitliche Ansicht der Fixiereinrichtung 30 dar. Die Fixiereinrichtung 30 ist einstückig und als U-förmiges Profil mit einem Boden 61 und zwei parallel ausgerichteten Schenkeln 60 ausgebildet.

Zwischen dem Boden 61 und jeweils einem Schenkel 60 ist angrenzend an den Boden eine Kröpfung 14 ausgebildet. Dadurch kann die Fixiereinrichtung 30 großflächig gebogen werden. Der Boden 61 ist derart abgeflacht ausgebildet, dass eine Ladungssicherungsvorrichtung 50, beispielsweise eine Ladungssicherungslatte 53 vollständig auf dem Boden 61 aufliegen kann.

Damit die Fixiereinrichtung 30 in eine Halteeinrichtung 20 eingesteckt werden kann, ist jeweils an einer Außenseite 67 ein Niet 62 angebracht. Ein Nietkopf 62a des jeweiligen Niet 62 kann an der Außenseite 67 des Schenkels 60 zweckmäßigerweise hervorstehen. Die Niete 62 können jeweils über eine zugehörige Öffnung mit dem jeweiligen Schenkel 60 verbunden sein. Insbesondere erstreckt sich der Niet 62 durch die Öffnung im jeweiligen Schenkel 60 und ist auf einer Innenseite 66 des Schenkels 60 verformt, so dass der Niet 62 mit dem Nietkopf 62a auf der Außenseite 67 formschlüssig mit dem Schenkel 60 verbunden ist. Der Nietkopf 62a kann zur Fixierung in der Halteeinrichtung 20 in die zugehörigen Aufnahmemittel der Halteeinrichtung 20 eingreifen, sodass die Fixiereinrichtung 30 in der Halteeinrichtung 20 auf einer bestimmten Höhe befestigt werden kann. Die Niete 62 sind beispielhaft an den Schenkeln 60 jeweils auf der gegenüberliegenden Seite des Bodens 61 angeordnet.

Da die Breite des U-förmigen Profils zweckmäßigerweise an die Breite der Halteeinrichtung 20 angepasst ist, stehen die Schenkel 60 im eingesteckten Zustand in Kontakt zu der Halteeinrichtung 20. Damit die von den Schenkeln 60 hervorstehenden Niete 62 ohne Blockade in die zugehörige Ausnehmung eingesteckt werden können, ist die Fixiereinrichtung 30 vorteilhafterweise aus einem biegsamen Blech, wie beispielsweise Federstahl, gebildet.

Zum Zwecke einer einfachen Biegung der Fixiereinrichtung 30, ist an jeweils einer Innenseite 66 des Schenkels 60 ein Flügel 63 angebracht. Die Innenseite 66 ist in Richtung der Profilmitte des U-förmigen Profils orientiert. Die Flügel 63 stehen zweckmäßigerweise senkrecht auf den Schenkeln 60. Die Flügel 63 weisen jeweils eine rechteckige Form mit einer Eingriffsöffnung 64 auf. Die Eingriffsöffnung 64 ist als Bohrung ausgebildet. Durch die Eingriffsöffnung 64 kann eine Sicherungsringzange eingreifen, wodurch die Schenkel 60 der Fixiereinrichtung 30 mittels der Flügel 63 nach innen gebogen werden und somit mühelos in die Halteeinrichtung 20 eingesteckt werden können.

Die Flügel 63 sind beispielhaft mittig an einer freien Kante 68 des jeweiligen Schenkels 60 angeordnet. Die freie Kante 68 des Schenkels 60 ist an dem dem Boden 61 gegenüberliegenden Ende des Schenkels 60 angeordnet. An der freien Kante 68 ist rechtsseitig und linksseitig des Flügels 63 ein Einschnitt 65 ausgebildet.

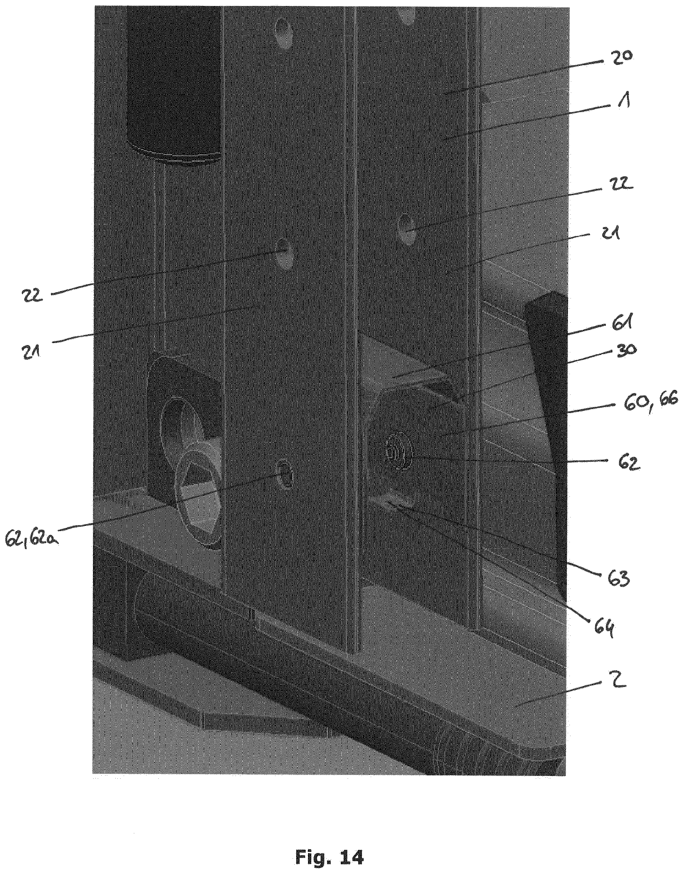

Fig. 14 zeigt eine perspektivische Ansicht eines unteren Teils einer erfindungsgemäßen Runge nach einem weiteren besonders bevorzugten Ausführungsbeispiel mit einer Fixiereinrichtung 30 gemäß Fig. 12. Die Runge weist eine Halteeinrichtung 20 für eine Ladungssicherungsvorrichtung 50 auf, welche durch zwei parallel zueinander angeordnete Profilschenkel 21 gebildet und am Fahrzeugrahmen 2 angeordnet ist.

Die Profilschenkel 21 umfassen jeweils Aufnahmemittel 22 für die Fixiereinrichtung 30, welche fluchtend zueinander angeordnet sind. Die Aufnahmemittel 22 sind als Bohrungen ausgebildet. Vorteilhafterweise sind die Aufnahmemittel 22 in regelmäßigen Abständen in unterschiedlichen Höhenpositionen an den Profilschenkeln 21 angeordnet. In die Aufnahmemittel 22 können die Niete 62 der Fixiereinrichtung 30 eingreifen, wodurch die Fixiereinrichtung 30 fest mit der Halteeinrichtung 20 verbunden werden kann. Über die Eingriffsöffnung 64 der Flügel 63 der Fixiereinrichtung 30 kann mittels einer Sicherungsringzange die Fixereinrichtung 30 einfach aus der Halteeinrichtung 20 entfernt und bei Bedarf in einer anderen Höhenposition angebracht werden.

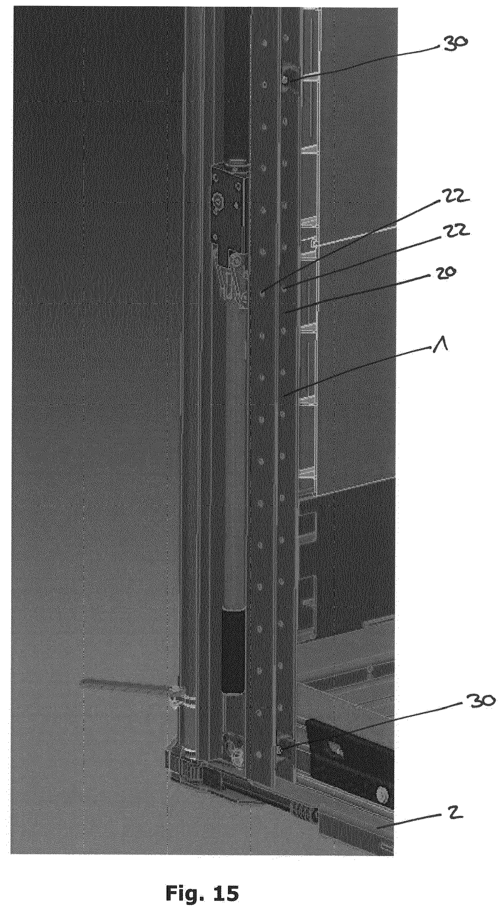

Der Boden 61 der Fixiereinrichtung 30 kann eine stabile Auflage für eine Ladungssicherungsvorrichtung 50 bilden. Damit kann der Benutzer des Nutzfahrzeuges je nach Art der zu transportierenden Beladung entscheiden, in welcher Höhe die Ladungssicherungsvorrichtung 50 platziert werden soll. Beispielhaft sind in Fig. 15 zwei Fixiereinrichtungen 30 in unterschiedlichen Höhenpositionen in der Halteeinrichtung 20 angeordnet. Somit lassen sich sehr flexibel mehrere Ladungssicherungsvorrichtungen 50 in der Halteeinrichtung 20 anbringen.

### Bezugszeichenliste

- 1: Runge
- 2: Fahrzeugrahmen
- 10: Rungengrundkörper
- 11: Führungsschiene
- 12: Rückenblech
- 13: Blechstreifen
- 14: Kröpfung
- 20: Halteeinrichtung
- 21: Profilschenkel
- 21a: äußerer Profilschenkel
- 21b: innerer Profilschenkel
- 22: Aufnahmemittel
- 23: Durchbruch
- 24: Bodenblech
- 25: Ausnehmung
- 30: Fixiereinrichtung
- 31: Einsteckblech
- 32: Rastfeder
- 33: Auflageschenkel
- 34: Griffschenkel
- 35: Feder
- 36: Auslenkabschnitt
- 37: Freischnitt
- 40: Schiebling
- 41: Rolle
- 50: Ladungssicherungsvorrichtung
- 51: Befestigungsschiene
- 52: Schlüssellochöffnung
- 53: Ladungssicherungslatte
- 60: Schenkel
- 61: Boden
- 62: Niet
- 62a: Nietkopf
- 63: Flügel
- 64: Eingriffsöffnung
- 65: Einschnitt
- 66: Innenseite
- 67: Außenseite
- 68: freie Kante

## Patentansprüche

1. Runge (1) für einen Nutzfahrzeugaufbau mit einem Rungengrundkörper (10) und wenigstens einer Halteeinrichtung (20) für eine Ladungssicherungsvorrichtung (50), wobei die Halteeinrichtung (20) fest mit dem Rungengrundkörper (10) verbunden ist und zwei parallel zueinander angeordnete Profilschenkel (21) aufweist, wobei
die Halteeinrichtung (20) mehrere Aufnahmemittel (22) für wenigstens eine Fixiereinrichtung (30) der Ladungssicherungsvorrichtung (50) aufweist, die in unterschiedlichen Höhenpositionen der Halteeinrichtung (20) angeordnet sind,
**dadurch gekennzeichnet, dass**
die Aufnahmemittel (22) an oder in den Profilschenkeln (21) ausgebildet sind, und wobei zwei Halteeinrichtungen (20) auf gegenüberliegenden Seiten des Rungengrundkörpers (10) vorgesehen sind.

2. Runge (1) nach Anspruch 1,
**dadurch gekennzeichnet, dass**
die Aufnahmemittel (22) als Durchbrüche (23) in den Profilschenkeln (21) ausgebildet sind, wobei jeweils zwei in gegenüberliegenden Profilschenkeln (21) angeordnete Durchbrüche (23) fluchtend zueinander ausgerichtet sind.

3. Runge (1) nach einem der Ansprüche 1 oder2,
**dadurch gekennzeichnet, dass**
die Aufnahmemittel (22) als Ausnehmungen ausgebildet sind, wobei jeweils zwei in gegenüberliegenden Profilschenkeln (21) angeordnete Ausnehmungen fluchtend zueinander ausgerichtet sind.

4. Runge (1) nach einem der vorhergehenden Ansprüche,
**dadurch gekennzeichnet, dass**
sich die Halteeinrichtung (20) über wenigstens die halbe Länge des Rungengrundkörpers (10) erstreckt.

5. Runge (1) nach einem der vorhergehenden Ansprüche,
**dadurch gekennzeichnet, dass**
der Rungengrundkörper (10) und die Halteeinrichtung (20) einstückig ausgebildet sind.

6. Runge (1) nach einem der vorhergehenden Ansprüche,
**dadurch gekennzeichnet, dass**
der Rungengrundkörper (10) und die Halteeinrichtung (20) durch ein mehrfach abgekantetes, gewalztes oder gerolltes Blech gebildet sind.

7. Runge (1) nach einem der vorhergehenden Ansprüche,
**dadurch gekennzeichnet, dass**
der Rungengrundkörper (10) eine Führungsschiene (11) für einen Schiebling (40) bildet.

8. Runge (1) nach Anspruch 7,
**dadurch gekennzeichnet, dass**
die Führungsschiene (11) durch eine C-förmige oder U-förmige Innenkontur des Rungengrundkörpers (10) gebildet ist.

9. Rungensystem mit einer Runge (1) nach einem der vorhergehenden Ansprüche und einer Fixiereinrichtung (30),
**dadurch gekennzeichnet, dass**
die Fixiereinrichtung (30) so ausgebildet ist, dass die Fixiereinrichtung (30) werkzeuglos an der Halteeinrichtung (20) montierbar und demontierbar ist.

10. Rungensystem nach Anspruch 9,
**dadurch gekennzeichnet, dass**
die Fixiereinrichtung (30) einen Rastmechanismus aufweist, der die Fixiereinrichtung (30) selbsttätig in der Halteeinrichtung (20) fixiert.

11. Rungensystem nach Anspruch 9 oder 10,
**dadurch gekennzeichnet, dass**
die Fixiereinrichtung (30) ein Einsteckbleck (31) zum Einschieben in die Durchbrüche (23) der Profilschenkel (21) der Halteeinrichtung (20) und eine Rastfeder (32) aufweist, die in einem eingeschobenen Zustand zwischen den Profilschenkeln (21) angeordnet ist und von dem Einsteckblech (31) so absteht, dass das Einsteckblech (31) unverlierbar in der Halteeinrichtung (20) fixiert ist.

12. Rungensystem mit einer Runge (1) nach einem der Ansprüche 1-8 und einer Fixiereinrichtung (30),
**dadurch gekennzeichnet, dass**
die Fixiereinrichtung (30) als U-förmiges Profil ausgebildet ist, welches einen Boden (61) und zwei Schenkel (60) umfasst, wobei die Schenkel (60) federartig biegbar ausgebildet sind.

13. Rungensystem nach Anspruch 12,
**dadurch gekennzeichnet, dass**
die Schenkel (60) jeweils einen über eine Außenseite (67) vorstehenden Niet (62) aufweisen, der in die Aufnahmemittel (22) der Halteeinrichtung (20) einsteckbar ist.

14. Rungensystem nach Anspruch 12 oder 13,
**dadurch gekennzeichnet, dass**
die Schenkel (60) jeweils einen über eine Innenseite (66) vorstehenden Flügel (63) mit einer Eingriffsöffnung (64) aufweisen.

15. Ladungssicherungssystem mit einem Rungensystem nach einem der Ansprüche 9 bis 14 und einer Ladungssicherungsvorrichtung (50),
**dadurch gekennzeichnet, dass**
die Ladungssicherungsvorrichtung (50) eine Befestigungsschiene (51) aufweist, die mit der Fixiereinrichtung (30) in der Halteeinrichtung (20) lösbar fixierbar und zur Aufnahme verschiedener Ladungssicherungselemente (52) angepasst ist, oder dass die Ladungssicherungsvorrichtung (50) ein oder mehrere Ladungssicherungslatten (53) aufweist, die mit jeweils einer Fixiereinrichtung (30) in der Halteeinrichtung (20) anordenbar sind.

16. Nutzfahrzeugaufbau mit einer Runge (1) und/oder einem Rungensystem und/oder einem Ladungssicherungssystem nach einem der vorhergehenden Ansprüche.

17. Nutzfahrzeug mit einem Nutzfahrzeugaufbau, einem Rungensystem und/oder einem Ladungssicherungssystem und/oder einer Runge (1) nach einem der vorhergehenden Ansprüche.

## Claims

1. A stanchion (1) for a commercial vehicle superstructure, having a stanchion main body (10) and at least one holding device (20) for a load-securing device (50), the holding device (20) being fixedly connected to the stanchion main body (10) and having two profile legs (21) arranged parallel to one another,
the holding device (20) having a plurality of accommodating means (22) for at least one fixing device (30) of the load-securing device (50), which are arranged at different height positions of the holding device (20),
**characterised in that**
the accommodating means (22) are formed on or in the profile legs (21), and wherein two holding devices (20) are provided on opposite sides of the stanchion main body (10).

2. The stanchion (1) according to Claim 1,
**characterised in that**
the accommodating means (22) are in the form of openings (23) in the profile legs (21), wherein each pair of openings (23) arranged in opposite profile legs (21) are aligned flush with one another.

3. The stanchion (1) according to one of Claims 1 or 2,
**characterised in that**
the accommodating means (22) are in the form of recesses, wherein each pair of recesses arranged in opposite profile legs (21) are aligned flush with one another.

4. The stanchion (1) according to any one of the preceding claims,
**characterised in that**
the holding device (20) extends over at least half of the length of the stanchion main body (10).

5. The stanchion (1) according to any one of the preceding claims,
**characterised in that**
the stanchion main body (10) and the holding device (20) are formed in one piece.

6. The stanchion (1) according to any one of the preceding claims,
**characterised in that**
the stanchion main body (10) and the holding device (20) are formed by a metal sheet, which is bent multiple times, rolled or circular bent.

7. The stanchion (1) according to any one of the preceding claims,
**characterised in that**
the stanchion main body (10) forms a guide rail (11) for a slider (40).

8. The stanchion (1) according to Claim 7,
**characterised in that**
the guide rail (11) is formed by a C-shaped or U-shaped inner contour of the stanchion main body (10).

9. A stanchion system having a stanchion (1) according to any one of the preceding claims and a fixing device (30),
**characterised in that**
the fixing device (30) is designed such that the fixing device (30) can be mounted on and removed from the holding device (20) without tools.

10. The stanchion system according to Claim 9,
**characterised in that**
the fixing device (30) has a latching mechanism, which fixes the fixing device (30) in the holding device (20) automatically.

11. The stanchion system according to Claim 9 or 10,
**characterised in that**
the fixing device (30) has an insertion plate (31) for insertion into the openings (23) in the profile legs (21) of the holding device (20) and a latching spring (32) which, when in an inserted state, is arranged between the profile legs (21) and protrudes from the insertion plate (31) in such a manner that the insertion plate (31) is fixed in a captive manner in the holding device (20).

12. A stanchion system having a stanchion (1) according to any one of the Claims 1-8 and a fixing device (30),
**characterised in that**
the fixing device (30) is in the form of a U-shaped profile, which comprises a base (61) and two legs (60), wherein the legs (60) are bendable in a springlike manner.

13. The stanchion system according to Claim 12,
**characterised in that**
the legs (60) each have a rivet (62) which protrudes from an outer side (67) and can be inserted into the accommodating means (22) of the holding device (20).

14. The stanchion system according to Claim 12 or 13,
**characterised in that**
the legs (60) each have a wing (63) which protrudes from an inner side (66) and has an engagement opening (64) .

15. A load-securing system having a stanchion system according to any one of Claims 9 to 14 and a load-securing device (50),
**characterised in that**
the load-securing device (50) has a fastening rail (51), which can be fixed in the holding device (20) in a detachable manner using the fixing device (30) and is adapted to accommodate different load-securing elements (52), or **in that** the load-securing device (50) has one or more load-securing slats (53), which can be arranged in the holding device (20) using a fixing device (30) in each case.

16. A commercial vehicle superstructure having a stanchion (1) and/or a stanchion system and/or a load-securing system according to any one of the preceding claims.

17. A commercial vehicle having a commercial vehicle superstructure, a stanchion system and/or a load-securing system and/or a stanchion (1) according to any one of the preceding claims.

## Revendications

1. Rancher (1), destiné à une structure de véhicule utilitaire, pourvu d'un corps de base de rancher (10) et d'au moins un système de retenue (20) pour un dispositif de sécurisation de charge (50), le système de retenue (20) étant solidement relié avec le corps de base de rancher (10) et comportant deux branches de profilé (21) placées à la parallèle l'une de l'autre, le système de retenue (20) comportant plusieurs moyens de logement (22) pour au moins un système de fixation (30) du dispositif de sécurisation de charge (50), qui sont placés dans différentes positions en hauteur du système de retenue (20),
**caractérisé en ce que**
les moyens de logement (22) sont conçus sur ou dans les branches de profilé (21), et deux systèmes de retenue (20) étant prévus sur des faces opposées du corps de base de rancher (10).

2. Rancher (1) selon la revendication 1,
**caractérisé en ce que**
les moyens de logement (22) sont conçus sous la forme d'ajours (23) dans les branches de profilé (21), chaque fois deux ajours (23) placés dans des branches de profilé (21) opposées étant orientés en alignement réciproque.

3. Rancher (1) selon l'une quelconque des revendications 1 ou 2,
**caractérisé en ce que**
les moyens de logement (22) sont conçus sous la forme d'évidements, chaque fois deux évidements placés dans des branches de profilé (21) opposées étant orientés en alignement réciproque.

4. Rancher (1) selon l'une quelconque des revendications précédentes,
**caractérisé en ce que**
le système de retenue (20) s'étend sur au moins la demi longueur du corps de base de rancher (10).

5. Rancher (1) selon l'une quelconque des revendications précédentes,
**caractérisé en ce que**
le corps de base de rancher (10) et le système de retenue (20) sont conçus en monobloc.

6. Rancher (1) selon l'une quelconque des revendications précédentes,
**caractérisé en ce que**
le corps de base de rancher (10) et le système de retenue (20) sont formés d'une tôle laminée ou roulée, plusieurs fois repliée.

7. Rancher (1) selon l'une quelconque des revendications précédentes,
**caractérisé en ce que**
le corps de base de rancher (10) forme un rail de guidage (11) pour un extendeur (40).

8. Rancher (1) selon la revendication 7,
**caractérisé en ce que**
le rail de guidage (11) est formé par un contour intérieur en forme de C ou en forme de U du corps de base de rancher (10).

9. Système de rancher, pourvu d'un rancher (1) selon l'une quelconque des revendications précédentes et d'un système de fixation (30),
**caractérisé en ce que**
le système de fixation (30) est conçu de telle sorte que le système de fixation (30) soit susceptible d'être monté et démonté sans outil sur le ou du système de retenue (20).

10. Système de rancher selon la revendication 9,
**caractérisé en ce que**
le système de fixation (30) comporte un mécanisme d'enclenchement qui fixe automatiquement le système de fixation (30) dans le système de retenue (20).

11. Système de rancher selon la revendication 9 ou 10,
**caractérisé en ce que**
le système de fixation (30) comporte une tôle enfichable (31) destinée à être insérée dans les ajours (23) des branches de profilé (21) du système de retenue (20) et un ressort d'enclenchement (32), qui en position insérée est placé entre les branches de profilé (21) et qui déborde de la tôle enfichable (31) de telle sorte que la tôle enfichable (31) soit fixée de manière imperdable dans le système de retenue (20).

12. Système de rancher pourvu d'un rancher (1) selon l'une quelconque des revendications 1 à 8 et d'un système de fixation (30),
**caractérisé en ce que**
le système de fixation (30) est conçu sous la forme d'un profilé en forme de U, lequel comprend un fond inférieur (61) et deux branches (60), les branches (60) étant conçues en étant flexibles à la manière d'un ressort.

13. Système de rancher selon la revendication 12,
**caractérisé en ce que**
les branches (60) comportent chacune un rivet (62) débordant par-dessus une face extérieure (67) qui est enfichable dans les moyens de logement (22) du système de retenue (20).

14. Système de rancher selon la revendication 12 ou 13,
**caractérisé en ce que**
les branches (60) comportent chacune une ailette (63) débordant par-dessus une face intérieure (66), pourvue d'un orifice d'engagement (64).

15. Système de sécurisation de charge, pourvu d'un système de rancher selon l'une quelconque des revendications 9 à 14 et d'un dispositif de sécurisation de charge (50),
**caractérisé en ce que**
le dispositif de sécurisation de charge (50) comporte un rail de fixation (51) qui est susceptible d'être fixé de manière amovible par le système de fixation (30) dans le système de retenue (20) et qui est adapté pour recevoir différents éléments de sécurisation de charge (52) ou **en ce que** le dispositif de sécurisation de charge (50) comporte une ou plusieurs lattes de sécurisation de charge (53), qui par chaque fois un système de fixation (30) sont susceptibles d'être placées dans le système de retenue (20).

16. Structure de véhicule utilitaire, pourvue d'un rancher (1) et/ou d'un système de rancher et/ou d'un système de sécurisation de charge selon l'une quelconque des revendications précédentes.

17. Véhicule utilitaire, pourvu d'une structure de véhicule utilitaire, d'un système de rancher et/ou d'un système de sécurisation de charge et/ou d'un rancher (1) selon l'une quelconque des revendications précédentes.
